(19) Europäisches Patentamt / European Patent Office / Office européen des brevets

(11) **EP 3 924 884 B1**

(12) **EUROPEAN PATENT SPECIFICATION**

(45) Date of publication and mention of the grant of the patent:
**30.08.2023  Bulletin 2023/35**

(21) Application number: **20838656.5**

(22) Date of filing: **04.12.2020**

(51) International Patent Classification (IPC):
**G06N 3/092** (2023.01)    **G06N 7/00** (2023.01)

(52) Cooperative Patent Classification (CPC):
**G06N 7/00; G06N 3/092**

(86) International application number:
**PCT/JP2020/046194**

(87) International publication number:
**WO 2021/117845 (17.06.2021 Gazette 2021/24)**

(54) **SYSTEM AND METHOD FOR ROBUST OPTIMIZATION FOR TRAJECTORY-CENTRIC MODEL-BASED REINFORCEMENT LEARNING**

SYSTEM UND VERFAHREN ZUR ROBUSTENOPTIMIERUNG FÜR DAS TRAJEKTORISCHE ZENTRISCHE MODELLBASIERTE VERSTÄRKUNGSLERNEN

SYSTÈME ET PROCÉDÉ POUR UNE OPTIMISATION ROBUSTE POUR L'APPRENTISSAGE DE RENFORT BASÉ SUR UN MODÈLE CENTRÉ SUR LA TRAJECTOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2019 US 201916712329**

(43) Date of publication of application:
**22.12.2021 Bulletin 2021/51**

(73) Proprietor: **Mitsubishi Electric Corporation Tokyo 100-8310 (JP)**

(72) Inventors:
• **JHA, Devesh**
  **Cambridge, Massachusetts 02139-1955 (US)**
• **KOLARIC, Patrik**
  **Cambridge, Massachusetts 02139-1955 (US)**
• **RAGHUNATHAN, Arvind**
  **Cambridge, Massachusetts 02139-1955 (US)**
• **BENOSMAN, Mouhacine**
  **Cambridge, Massachusetts 02139-1955 (US)**
• **ROMERES, Diego**
  **Cambridge, Massachusetts 02139-1955 (US)**

(74) Representative: **Pfenning, Meinig & Partner mbB Patent- und Rechtsanwälte Joachimsthaler Straße 10-12 10719 Berlin (DE)**

(56) References cited:
• **KOC OKAN ET AL: "Optimizing the Execution of Dynamic Robot Movements With Learning Control", IEEE TRANSACTIONS ON ROBOTICS, IEEE SERVICE CENTER, PISCATAWAY, NJ, US, vol. 35, no. 4, 1 August 2019 (2019-08-01) , pages 909-924, XP011739099, ISSN: 1552-3098, DOI: 10.1109/TRO.2019.2906558 [retrieved on 2019-08-05]**
• **KOLARIC PATRIK ET AL: "Local Policy Optimization for Trajectory-Centric Reinforcement Learning", 2020 IEEE INTERNATIONAL CONFERENCE ON ROBOTICS AND AUTOMATION (ICRA), [Online] 22 January 2020 (2020-01-22), pages 5094-5100, XP055784550, DOI: 10.1109/ICRA40945.2020.9197058 ISBN: 978-1-7281-7395-5 Retrieved from the Internet: URL:https://arxiv.org/pdf/2001.08092.pdf> [retrieved on 2021-03-16]**

- **ZEMAN J. ET AL: "Robust Model Predictive Control of Linear Time Invariant System with Disturbances", IFAC THE 2012 IFAC WORKSHOP ON AUTOMATIC CONTROL IN OFFSHORE OIL AND GAS PRODUCTION, [Online] vol. 36, no. 18, 1 September 2003 (2003-09-01), pages 325-332, XP055786178, Red Hook, NY ISSN: 1474-6670, DOI: 10.1016/S1474-6670(17)34689-X ISBN: 978-1-123-47890-7 Retrieved from the Internet: URL:https://pdf.sciencedirectassets.com/31 4898/1-s2.0-S1474667003X70366/1-s2.0-S1474 66701734689X/main.pdf?X-Amz-Security-Token =IQoJb3JpZ2luX2VjENr/////////wEaCXVzLWVhc 3QtMSJHMEUCIQCWvVxTNbaO3wja/2XJ47YnVt bOYk8 yGlYYaxfanv1EeglgYSUNv5zxv22NHw1uTUHAp XH5e w93oS4RXa9rbQ/XXUYqtAMlEhADGgwwNTkw MDM1NDY 4NjUiDByWX> [retrieved on 2021-03-16]**
- **CHRISTOPH H LAMPERT ET AL: "Real-time detection of colored objects in multiple camera streams with off-the-shelf hardware components", JOURNAL OF REAL-TIME IMAGE PROCESSING, SPRINGER-VERLAG, BERLIN/HEIDELBERG, vol. 7, no. 1, 31 July 2010 (2010-07-31), pages 31-41, XP035014054, ISSN: 1861-8219, DOI: 10.1007/S11554-010-0168-3**
- **DAVISON J EDWARD: "The Output Control of Linear Time-Invariant Multivariable Systems with Unmeasurable Arbitrary Disturbances", IEEE TRANSACTIONS ON AUTOMATIC CONTROL, [Online] vol. AC-17, no. 5, 1 October 1972 (1972-10-01), pages 621-630, XP055885675, Retrieved from the Internet: URL:https://ieeexplore.ieee.org/stampPDF/g etPDF.jsp?tp=&arnumber=1100084&ref=aHR0c HM 6Ly9pZWVleHBsb3JlLmllZWUub3JnL2Fic3RyY WN0L 2RvY3VtZW50LzExMDAwODQ=> [retrieved on 2022-01-31]**

**Description**

[Technical Field]

This invention generally relates to system and method for simultaneously optimizing a local policy and control trajectory for trajectory-centric Reinforcement Learning.

[Background Art]

Reinforcement Learning (RL) is a learning framework that handles sequential decision-making problems, wherein an 'agent' or decision maker learns a policy to optimize a long-term reward by interacting with the (unknown) environment. At each step, an RL agent obtains evaluative feedback (called reward or cost) about the performance of its action, allowing it to improve (maximize or minimize) the performance of subsequent actions.

In general, global learning and optimization for arbitrary non-linear systems could be extremely challenging both computationally and algorithmically. However, a lot of tasks that a lot of systems need to perform are trajectory-centric and thus, a local learning and optimization could be very data-efficient. Trajectory-centric control could be challenging for a the non-linear system due to the time-varying nature of the controller. It is very common for a real system to deviate from the planned trajectory during operation due to an incorrect model or noise in observation or actuation. A machine learning method allows to learn and then predict the uncertainty in the evolution of a controlled trajectory. It is desirable, from a control perspective, to design a local state-dependent policy that can stabilize a controlled trajectory using the learned uncertainty model. Most of the techniques can't use the knowledge of the uncertainty present in the system model to allow stabilization of a desired control trajectory.

It is also desirable that the trajectory and the corresponding stabilizing policy be designed simultaneously. This will naturally strike a trade-off between the optimality of the control trajectory and its stabilization. Intuitively in such a setting, a policy optimization algorithm will avoid regions of state-space which might be harder to control and thus, can exploit the uncertainty in the model to design robust-optimal trajectory-centric controllers. Most of the current techniques perform these two steps (trajectory design and controller synthesis) separately and thus, can't exploit such knowledge of model uncertainty.

In the light of above-mentioned facts and challenges, there is a requirement of better policy optimization methods that can use the uncertain statistical models of physical systems and exploit the structure of these models for robust performance of these systems across a wide range of tasks.

Reference is made to KOC OKAN ET AL, "Optimizing the Execution of Dynamic Robot Movements With Learning Control", IEEE TRANSACTIONS ON ROBOTICS, IEEE SERVICE CENTER, PISCATAWAY, NJ, US, vol. 35, no. 4, 1 August 2019, pages 909-924, which describes an adaptive and cautious iterative learning control (ILC) algorithm where the stability of the control updates is analyzed probabilistically.

In the present disclosure, the term policy is used as an abbreviation for the term control policy. Accordingly, the term local policy is used as an abbreviation for the term local control policy. Moreover, the terms local policy, stabilizing policy and local stabilizing policy are used synonymously.

[Summary of Invention]

The invention is defined in the appended independent claims 1 and 11. Preferred embodiments of the invention are set out in the appended dependent claims.

Recent research has resulted in remarkable success of these algorithms in various domains like computer games. In trajectory-centric RL, the goal is to optimize a policy that can successfully perform a task from an initial state of the system and guide the system to desired final state(s). The trajectory-centric methods have the advantage that they can learn faster as these methods learn local predictive models and these use them to optimize policies in a local neighborhood of the system.

Reinforcement learning algorithms can be broadly divided into two categories-Model-based methods and model-free methods. Model-based Reinforcement Learning (MBRL) techniques are generally considered to be data-efficient as they learn a task-independent predictive model for the system. The learned model is then used to synthesize policies for the system using stochastic control approaches. However, these methods are generally very hard to train and thus result in low-performance policies. There are several reasons for low performance obtained by these class of algorithms and one of the key challenges is that the predictive models for the system estimated during the learning process are inherently stochastic due to the noise present in data collected during learning process. As a result, a wrong model can drive the optimization algorithm to parts of state-space where the system is unstable and the learning process can then diverge. Another challenging aspect of MBRL is that an estimated model could have different levels of uncertainty in different regions of state-space and thus, the subsequently policy optimization step should exploit this structure of the learned statistical model for optimal performance. Most of the policy-optimization techniques either ignore or can't incorporate this information during policy optimization.

MBRL has the advantage is that the predictive models estimated during learning are task-agnostic and hence, they can be used for multiple tasks and thus, are more efficient in terms of learning across multiple tasks. Thus, MBRL allows re-use of learned models to compute policies for different tasks. As a result, MBRL has the potential to enable learning of efficient policies for a lot of physical systems where collecting lots of data for optimizing policies could be very expensive.

According to some embodiments of the present invention, policy optimization is performed using the uncertain statistical models of physical systems to exploit the structure of these models for robust performance of these systems across a wide range of tasks. Further, some embodiments provide a controller and method which can handle arbitrary non-linear systems by effectively performing both computation and the related learning algorithms. As a lot of tasks that a lot of systems need to perform are trajectory-centric, some embodiments of the present invention can provide a local learning and optimization that are very data-efficient, resulting in the improvement of computers (computer performances).

Some embodiments of the present disclosure are based on recognition that a computer-implemented learning method is provided for optimizing a control policy controlling a system. Some examples of such systems may be systems including mechanical systems like HVAC systems, factory automation systems, robotic systems, and high-performance induction motors, etc. In this case, the method may include receiving states of the system being operated by a task-specific policy; initializing the control policy as an initial guess for performing a task (e.g., known partial models for the system and task); collecting data which may include the tuple of current state, action and the next state using a current control policy; estimating a statistical predictive model for the system; estimating the predictions as well as uncertainties associated with the prediction at any state, control pair; estimating the local set around the nominal system state in which the system needs to be stabilized; computing the gradient of a robustness constraint which can be used to optimize the parameters of the local stabilizing policy; computing the gradient of the dynamics of the system; determining a trajectory-centric control policy by solving the non-linear optimization program to minimize the cost of the trajectory and the local stabilizing policy using the gradient of the robustness constraint.

Some embodiments provide method and system to perform a trajectory-centric task for a system in the presence of uncertainties of a statistical model estimated during learning. The controller for optimizing a local time-invariant control policy of a non-linear system for trajectory-centric reinforcement learning includes an interface configured to receive data including tuples of system states, control data and state transitions measured by sensors; a memory to store processor executable programs including a stochastic predictive learned model for generating a nominal state and control trajectory (an open-loop trajectory) for a desired time-horizon as a function of time steps, in response to a task command for the system received via the interface, a control policy including machine learning method algorithms and an initial random control policy, a local policy for regulating deviations along a nominal trajectory; at least one processor configured to: learn the stochastic predictive model for the system using a set of the data collected during trial and error experiments performed using the initial random control policy; estimate mean prediction and uncertainty associated with the stochastic predictive model; formulate a trajectory-centric controller synthesis problem to compute the nominal trajectory along with a feedforward control and a stabilizing time-invariant feedback control simultaneously; determine a local set of deviations of the system, using the learned stochastic system model, from a nominal system state upon use of a control input at a current time-step; determine a system state with a worst-case deviation from the nominal system state in the local set of deviations of the system; determine a gradient of the robustness constraint by computing a first-order derivative of the robustness constraint at the system state with worst-case deviation; determine the optimal system state trajectory, the feedforward control input and a local time-invariant feedback policy that regulates the system state to the nominal trajectory by minimizing a cost of a state-control trajectory while satisfying state and input constraints; provide and solve a robust policy optimization problem using non-linear programming; update the control data according to the solved optimization problem; and output the updated control data via the interface.

Furthermore, another embodiment of the present invention can provide a computer-implemented method (control system) for controlling a system by optimizing a control policy. The computer-implemented method is provided for optimizing a local time-invariant control policy of a non-linear system for trajectory-centric reinforcement learning. The method includes steps of learning a stochastic predictive model for the system using a set of data collected during trial and error experiments performed using an initial random control policy; estimating mean prediction and uncertainty associated with the stochastic predictive model; formulating a trajectory-centric controller synthesis problem to compute a nominal trajectory along with a feedforward control and a stabilizing time-invariant feedback control simultaneously; determining a local set of deviations of the system, using the learned stochastic system model, from a nominal system state upon use of a control input at a current time-step; determining a system state with a worst-case deviation from the nominal system state in the local set of deviations of the system; determining a gradient of the robustness constraint by computing a first-order derivative of the robustness constraint at the system state with worst-case deviation; determining the optimal system state trajectory, the feedforward control input and a local time-invariant feedback policy that regulates the system state to the nominal trajectory by minimizing a cost of a state-control trajectory while satisfying state and input constraints; providing and solving a robust policy optimization problem using non-linear programming; updating the control data according to the solved optimization problem; and output the updated control data via the interface.

The system may include an interface configured to receive task commands and states of the system via sensors; a memory to store computer-executable programs including an initializer, a policy collector, an estimator, an agent and an policy-update program, a program to estimate the stochastic predictive model of the system, a program to compute a robustness constraint and its gradient, a program to solve the non-linear optimization problem to obtain the optimal trajectory and the stabilizing policy; and a processor, in connection with the memory, configured to initialize the control policy as an initial guess for performing a task (e.g., known partial models for the system and task); collecting data which may include the tuple of current state, action and the next state using a current control policy; estimating a statistical predictive model for the system; estimating the predictions as well as uncertainties associated with the prediction at any state, control pair; estimating the local set around the nominal system state in which the system needs to be stabilized; computing the gradient of a robustness constraint which can be used to optimize the parameters of the local stabilizing policy; computing the gradient of the dynamics of the system; determining a trajectory-centric control policy by solving the non-linear optimization program to minimize the cost of the trajectory and the local stabilizing policy using the gradient of the robustness constraint.

The presently disclosed embodiments will be further explained with reference to the attached drawings. The drawings shown are not necessarily to scale, with emphasis instead generally being placed upon illustrating the principles of the presently disclosed embodiments.

[Brief Description of Drawings]

[Fig. 1A]

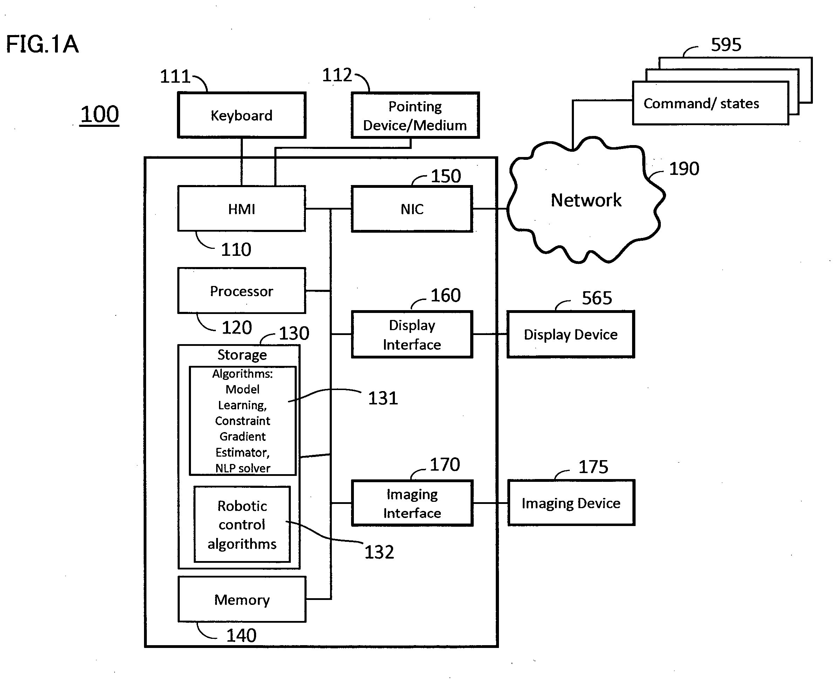

FIG. 1A is a diagram illustrating a control system (controller) for controlling a mechanical system (device, e.g., robots) based on the quasi-newton trust region policy optimization, according to embodiments of the present invention;
[Fig. 1B]

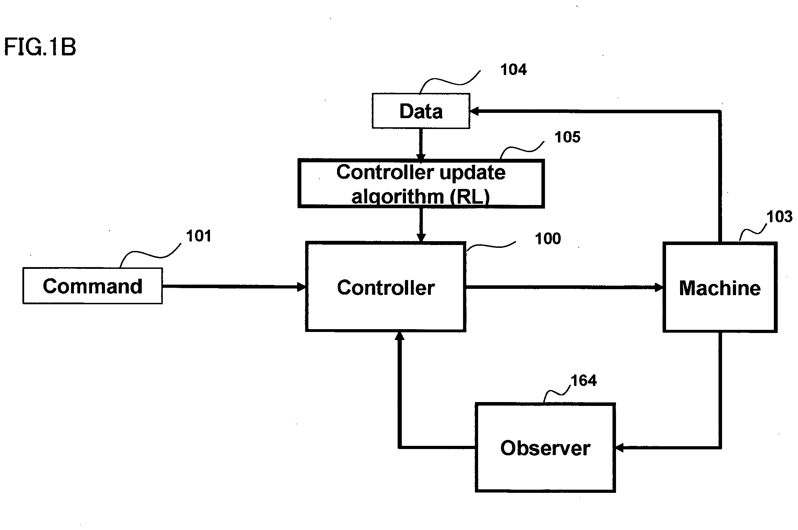

FIG. 1B is a diagram illustrating a data processing flow using the controller (control system), according to embodiments of the present invention;
[Fig. 2]

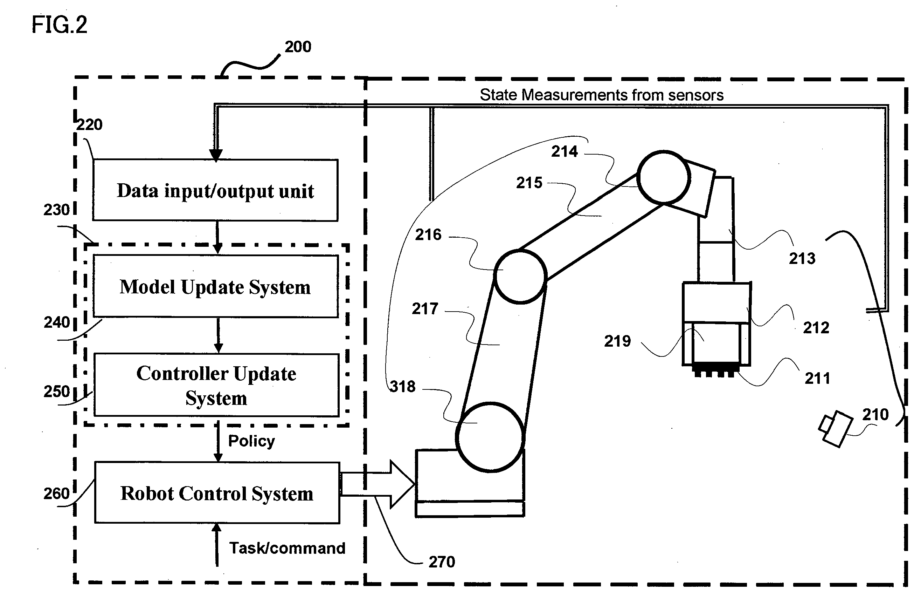

FIG. 2 is a diagram illustrating an example of a system based on the proposed robust trajectory-centric controller optimization, according to embodiments of the present invention;
[Fig. 3]

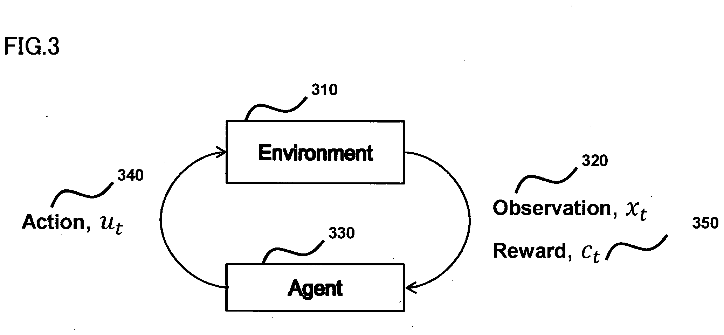

FIG. 3 is a diagram illustrating the general idea of reinforcement learning, according to examples of the present disclosure;
[Fig. 4]

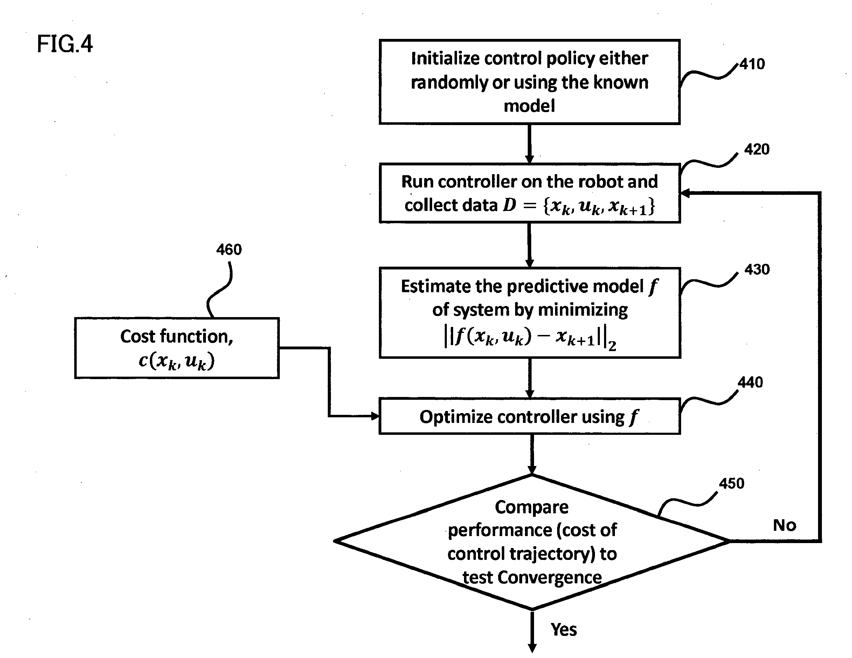

FIG.4 is a diagram illustrating the idea of Model-based reinforcement learning, according to the embodiments of the present disclosure;
[Fig. 5A]

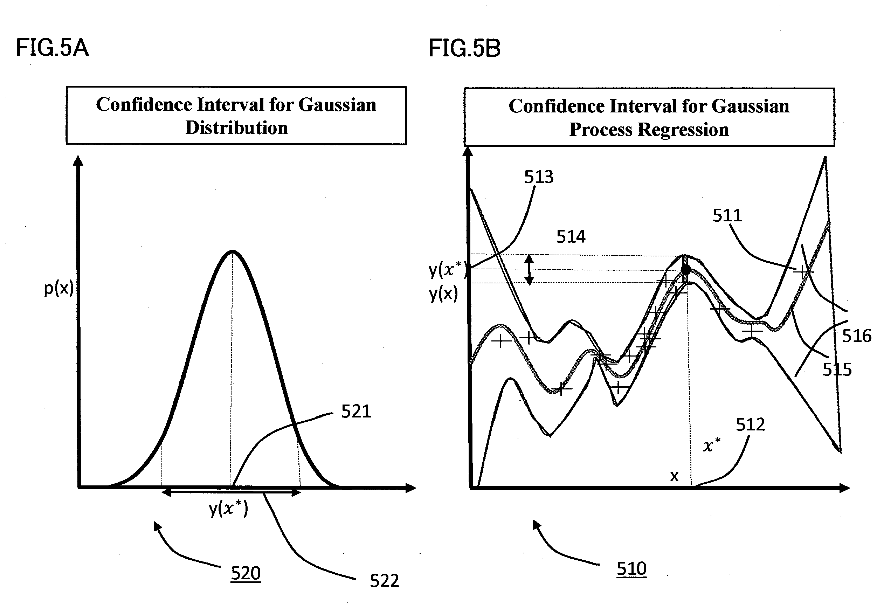

FIG. 5A is diagrams illustrating the estimation of a stochastic input-output relationship using Gaussian processes and the uncertainty sets that can be estimated using confidence intervals, according to the embodiments of the present disclosure;
[Fig. 5B]
FIG. 5B is diagrams illustrating the estimation of a stochastic input-output relationship using Gaussian processes and the uncertainty sets that can be estimated using confidence intervals, according to the embodiments of the present disclosure;
[Fig. 6A]

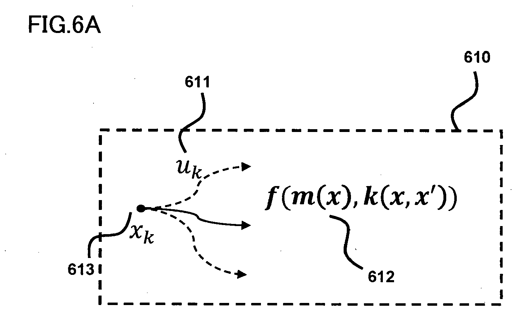

FIG.6A is a diagram illustrating the idea of evolution of dynamics of a system using a stochastic process, according to the embodiments of the present disclosure;
[Fig. 6B]

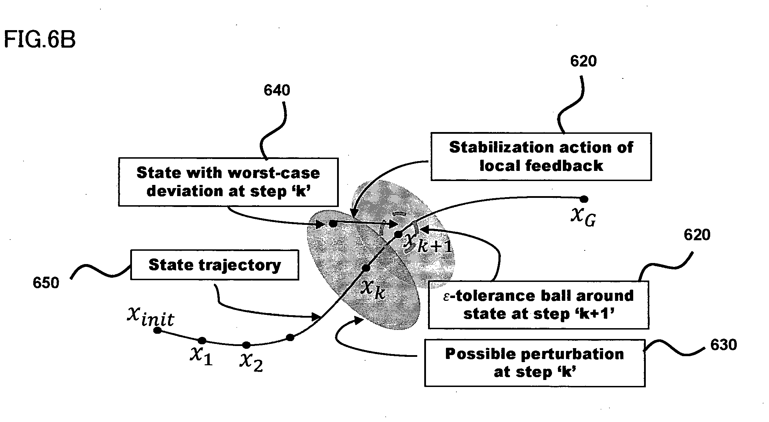

FIG.6B is a diagram illustrating the idea of stabilization of a controlled trajectory using a stabilizing policy during the trajectory-centric controller design, according to the embodiments of the present disclosure;
[Fig. 7]

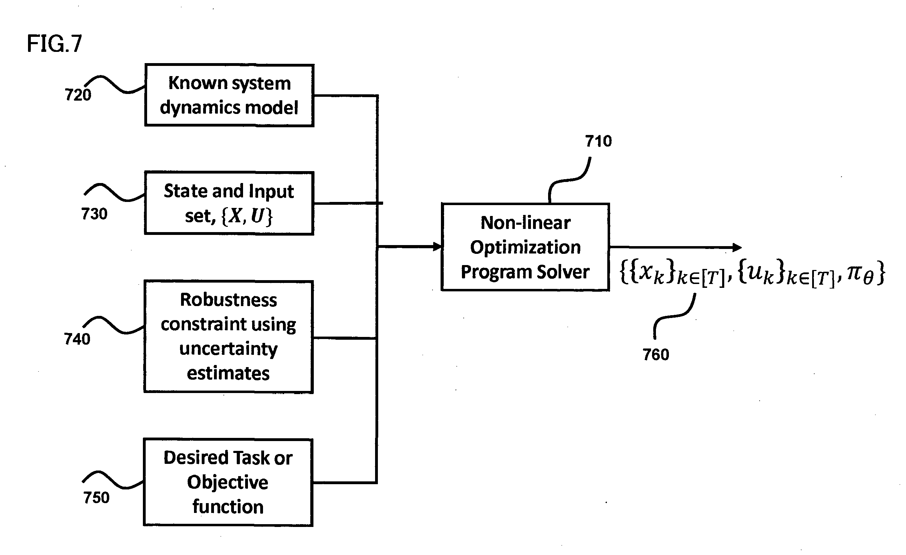

FIG. 7 is a flowchart illustrating the different steps involved in solution of the non-linear optimization program used to solve the trajectory-centric controller, according to the embodiments of the present disclosure;
[Fig. 8]

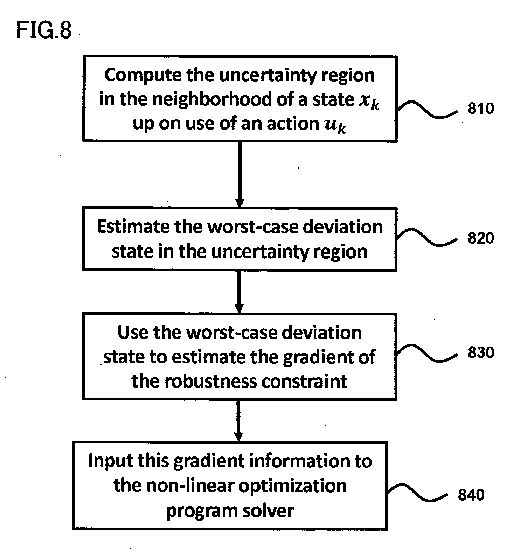

FIG.8 is a flowchart illustrating the different steps to estimate the gradient of the robustness constraint for the trajectory-centric controller synthesis, according to the embodiments of the present disclosure;

[Fig. 9]

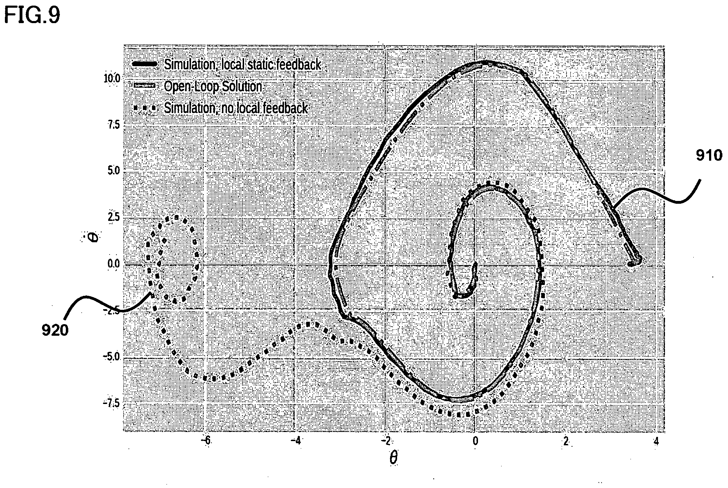

FIG. 9 is a diagram illustrating an example for the stabilizing behavior of the designed controller, according to the embodiments of the present disclosure;

[Fig. 10A]

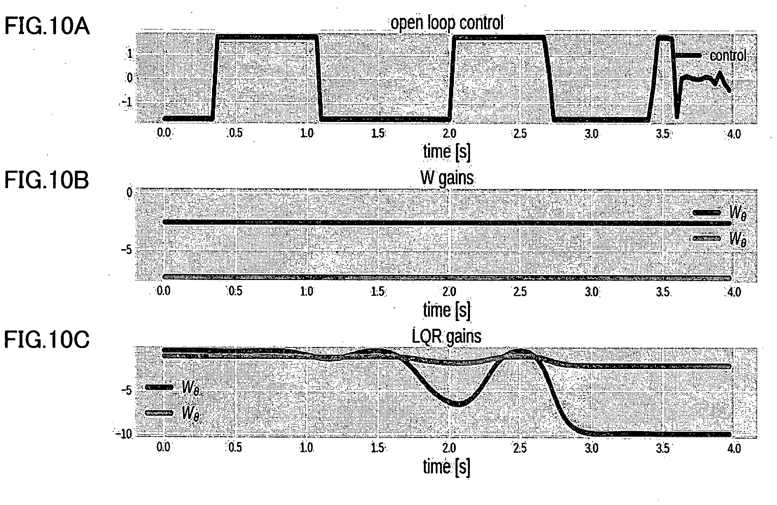

FIG.10A is a diagram illustrating an example for the control trajectory and the stabilizing policy obtained during the optimization process, according to the embodiments of the present disclosure;

[Fig. 10B]

FIG.10B is a diagram illustrating an example for the control trajectory and the stabilizing policy obtained during the optimization process, according to the embodiments of the present disclosure;

[Fig. 10C]

FIG.10C is a diagram illustrating an example for the control trajectory and the stabilizing policy obtained during the optimization process, according to the embodiments of the present disclosure;

[Fig. 11]

FIG. 1 1 is a diagram illustrating an example for the statistical behavior of the controlled system under various levels of disturbance injected into the system, according to the embodiments of the present disclosure;

[Fig. 12]

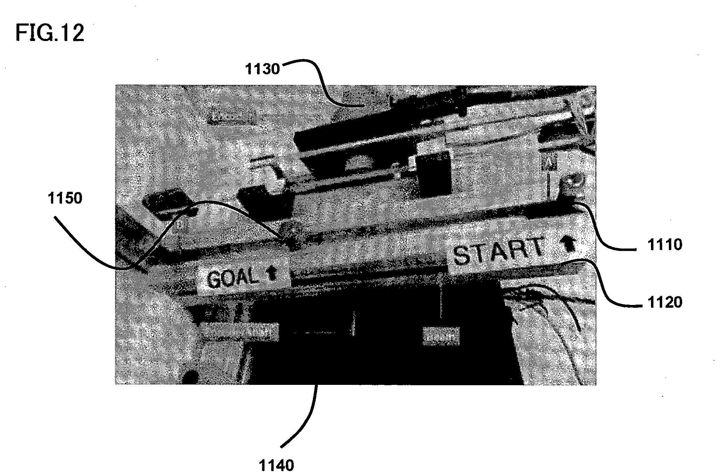

FIG. 12 is a diagram illustrating an example for a ball-and-beam system

[Fig. 13]

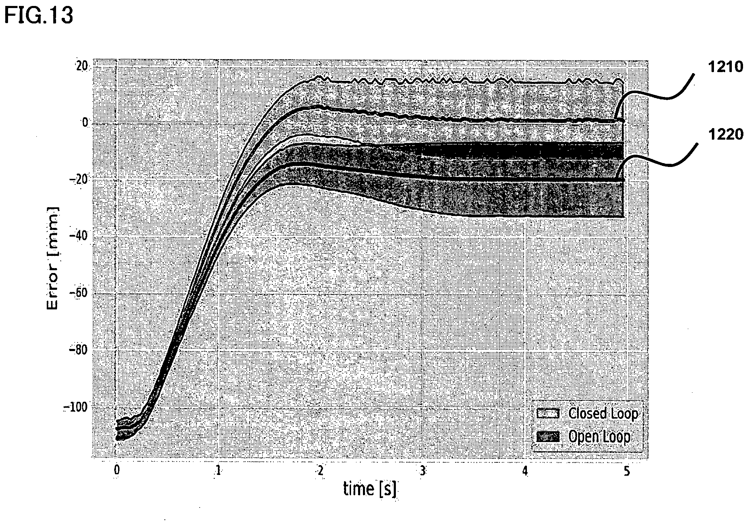

FIG. 13 is a diagram illustrating an example of performance comparison of the ball-and-beam system using the proposed trajectory-centric controller over the open-loop control, according to the embodiments of the present disclosure.

[Description of Embodiments]

The following description provides exemplary embodiments only, and is not intended to limit the scope, applicability, or configuration of the disclosure.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Also, individual embodiments may be described as a process, which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed, but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

FIG. 1A shows a block diagram of a control system (controller) 100 according to some embodiments of the present invention. The system 100 can include a human machine interface (HMI) with input/output (I/O) interface 110 connectable with a keyboard 111 and a pointing device/medium 112, a 3D sensor 116, a processor 120, a storage device 130 storing algorithms to be performed with a memory 140 and the processor 120, a network interface controller 150 (NIC) connectable with a network 190 including local area networks and internet network (not shown), a display interface 160 connected to a display device 165, an imaging interface 170 connectable with an imaging device 175. The NIC may include a transceiver (not shown) to perform wireless communications for receiving commands and state measurement data. The HMI with I/O interface 110 may include analog/digital and digital/analog converters. The HMI with I/O interface 110 may also include a wireless communication interface that can communicate with other 3D point cloud display systems or other computers via wireless internet connections or wireless local area networks, which enable to construct multiple 3D point clouds. The system 100 can include a power source (not shown). The power source may be a battery rechargeable from an external power source (not shown) via the I/O interface 110. Depending upon the application the power source may be located outside of the system 100.

The system 100 can receive electric text/imaging documents 195 including speech data via the network 190 connected to the NIC 150. The storage device 130 includes algorithm modules 131 including, the model uncertainty estimator, the robust constraint gradient evaluator and a non-linear optimization program solver that are stored into the storage 130 as program code data, and robotic control algorithms 132. The algorithms of model learning, robust constraint gradient estimator and the non-linear program optimizer 131 may be stored to a computer readable recording medium (not shown) so that the processor 120 can execute the algorithms of the models 131-132 and multimodal encoder-decoders 200 by loading the algorithms from the medium. Further, the pointing device/medium 112 may include modules that read and perform programs stored on a computer readable recording medium.

FIG. 1B is a diagram illustrating a data processing flow using the controller (control system) 100, according to embodiments of the present invention. Some embodiments of the present disclosure are based on the realization that a controller 100 for a machine 103 can be designed to achieve a particular command or task 101. A controller 100 is a computer software that sends control signals to a machine 103 which implements the control signal and the state of the machine is observed by the observer 164. Some embodiments of the disclosure are based on the realization that a Model-based Reinforcement Learning algorithm 105 can be used to learn an optimal policy for the controller 100 using operational data 104 obtained from the machine. For a particular task or command, the controller is initialized with an initial policy which determines a control signal based on the current state of the machine. The state of the machine can be observed by the observer. This control signal is then implemented on the machine and the state transition of the machine is observed. This tuple of current state, control signal and the next state is the data that is used by the learning algorithm to compute a new policy for executing the command or task. This process is then repeated till the policy converges to a stable policy (i.e, one that doesn't change up on collection of more data).

FIG. 2 is a diagram illustrating an example of a control system based on the proposed robust optimization for trajectory-centric RL, according to embodiments of the present invention. In the following, the control system is described as an example that are applied to a robotic system 200, however it should be noted that a control system and a computer-implemented method according to the present invention are not limited to the robotic systems. Some systems or computer-implemented method according to the present invention can be introduced to systems including mechanical systems like HVAC systems, factory automation systems, robotic systems, and high-performance induction motors, etc.

The robotic system 200 in the FIG. 2 may include a robotic manipulator equipped with sensors for state measurements and a computer-instrumented system for storing data and controlling the manipulator arm. The manipulator arm may include several rigid links 217, 215, 213 and joints 318, 216, 214. The manipulator arm is controlled using a robot control system that receives a command or task that is externally supplied to the system. An example of the command or task could be grasping an object 212 using the manipulator or performing an assembly operation using the objects 211 held by the gripper 212. The robot control system sends a control signal 270 to the manipulator. The control signal 270 could be the torques to be applied at each of the joints 318, 216, 214 of the manipulator and opening/closing of gripper 212. The state of the robotic system is measured using sensors. These sensors may include encoders at the joints of the joints 318, 216, 214, a camera 210 that can observe the environment of the robot and some tactile sensors 219 that can be attached to the jaws of the gripper 212. The state measurements from sensors are sent to a data input/output unit 220 which stores the data received from the sensors. Some embodiments of the disclosure initialize the robot control system with an initial control policy for a desired task. Several episodes of the control policy are implemented on the robotic system and the state measurement data from the sensors is collected in a data input/output unit 220. This data is then used by a software containing a computer program 230 for updating the current policy of the robotic system. The program for updating the policy contains a model update system 240 which may be a Gaussian process. The models updated by 240 are then passed to the controller update system 250 which may be the robust trajectory-centric policy optimizer. The controller update system 250 then sends the updated policy to the robot control system 260. This process is repeated till the optimal policy for control of the robot is reached.

FIG. 3 is a diagram illustrating the general idea of reinforcement learning, according to the embodiments of the present disclosure. Reinforcement Learning (RL) is a learning framework that handles sequential decision-making problems, wherein an 'agent' 330 or decision maker learns a policy to optimize a long-term reward (or cost) by interacting with the (unknown) environment 310. At each step, an RL agent obtains evaluative feedback (called reward or cost) 350 about the performance of its action 340 along with an observation of the environment, allowing it to improve (maximize or minimize) the performance of subsequent actions. The policy for a system is defined as a function that takes the current state of a system as an input and then generates an action as an output. An optimal policy is a policy that generates the optimal output for every state of the system, where optimality is measured with respect to an expected reward (or cost) for a given task.

Reinforcement Learning algorithms are divided into two broad categories: model-free and model-based. As the name suggests, the model-free RL algorithms do not use the state-transition probability of a system to learn a policy. In these type of algorithms, the policy for a system is parameterized as a function approximator. The policy parameters are then optimized either directly by maximize the expected reward for performing the desired task or estimating a value function associated with the task. These algorithms are generally very sample inefficient, i.e., they take very large number of training data to optimize a policy for the system. Furthermore, learning using these systems is task-dependent, as the optimization is performed to maximize the expected reward for a particular task.

Among the different kind of RL algorithms, MBRL algorithms are considered to be more data efficient. In a model-based RL algorithm, an initial (possibly random) control policy is used to collect state-transition data from a system. This state-transition data is then used to learn a forward predictive model for the system. It is important to note that learning of the predictive model is independent of any task and thus, any reward structure. Once a good estimate of the forward dynamics of the system is obtained, the dynamics model of the system is used to synthesize a controller that can perform the desired task. A task could be performed using a controlled trajectory or a state-dependent full policy. A controlled trajectory is a sequence of control inputs that can be implemented on the system from a known initial condition to achieve the desired state to perform the task. It is noted that such a controller is not state-dependent but is rather time-indexed. A state-dependent full policy could be independent of the initial state of the system and thus can be used from any initial state of the system to perform the desired task.

FIG. 4 is a diagram illustrating the idea of Model-based reinforcement learning, according to the embodiments of the present invention. The MBRL method consists of a step 410 to first initialize the controller either randomly or it is computed using a partially known model of the system that needs to be controlled. In absence of any knowledge of the model for the system, the controller can be initialized randomly. The controller is run to collect the state transition data in step 420, i.e., the tuple of ($x_k$, $u_k$, $x_{k+1}$). The controller may be run in an episodic fashin where the system is first initialized to an initial state $x_{init}$ and then the controller is run for 'T' time steps and the state transition data is collected. This episode may be repeated 'n' times until enough data is collected. In the next step 430, this data is used to learn a predictive model for the system by minimizing a loss function which may be given by the following expression-- $||x_{k+1} - f(x_k, u_k)||_2$. The function 'f' may be represented by a machine learning algorithm like Gaussian processed or Neural Networks. The learned model in 430 is then passed to the next step 440 along with a cost function 460 which computes a policy or a controller for the system to perform a desired task. The cost function $c(x_k, u_k)$ contains the information about the desired task that the system needs to perform as a function of state and inputs. The obtained policy is then tested for convergence in step 450 and if the convergence criteria hasn't been met yet, the whole process is repeated.

It is object of some embodiments of the invention to estimate a statistical model for the system using the state transition data collected. Several machine learning methods can be used for this step including Gaussian processes or stochastic neural networks. Gaussian process is a stochastic process which is completely specified by a mean and covariance function.

FIG. 5A and 5B are diagrams illustrating the estimation of a stochastic input-output relationship using Gaussian processes and the uncertainty sets that can be estimated using confidence intervals, according to the embodiments of the present disclosure.

Gaussian process can be mathematically represented using the mean function, m(x) and the covariance function $k(x, x')$ of process $f(x)$ as follows:

$$m(x) = E[f(x)]$$

$$k(x, x') = E[(f(x) - m(x))(f(x') - m(x'))]$$

and the Gaussian process is written as follows:

$$f(x) \sim N(m(x), k(x, x')).$$

Note that $x$ here is the input to the Gaussian process and for the particular case of system dynamics estimation is the state-action pair ($x_k$, $u_k$). The covariance function $k(x, x')$ is also known as the kernel function. There are several choices for a valid covariance function. Some of the most common choices are Radial Basis Function (RBF) kernel, the Matern kernel, the Squared exponential (SE) kernel, etc. Being a stochastic process, the Gaussian process is a collection of random variables, any finite collection of which are multi-variate Gaussian. After completion of the learning process from a training data set 511 $D = \{X, Y\}$, the prediction at a test data point 512 $x^*$ is given by a Gaussian distribution (this can be shown using the property of multivariate Gaussian distribution). Mathematically, it is represented by the following relationships.

$$p(f(x^*)|D, x^*) = N(\mu(x^*), \Sigma(x^*))$$

$$\mu(x^*) = k_*^T (K + \sigma^2 I)^{-1} Y$$

$$\Sigma(x^*) = k_{**} - k_*^T (K + \sigma^2 I)^{-1} k_*$$

where, $\mu(x^*)$ and $\Sigma(x^*)$ represent the mean and variance of the Gaussian distribution at the test data point $x^*$. The learning process estimates the terms $K$, $k_{**}$ and $k_*$. Once these terms are estimated, the prediction at a new test data point is obtained using the closed form equations represented above in the equations. As a result, during the learning process, a probabilistic relationship 515 is learned for the desired input-output relationship between the current state-action pair and the next state transition.

Some embodiments of the invention are based on the realization that for an arbitrary non-linear system, synthesizing the full state-dependent policy for the system is a very challenging task computationally as well as numerically. This requires a reliable estimate of the global model of the system and is also a challenging problem to solve. On the other hand, computing a local controlled trajectory is an easier problem but it might have poor performance as it is very susceptible to initial conditions and is time-indexed. Furthermore, the performance might decrease in the presence of an incorrect, uncertain model. Thus to achieve good performance with a trajectory-centric controller, this invention proposes to use a stabilizing controller that can ensure high performance in presence of bounded uncertainties.

It is the object of some embodiments of the invention to use the learned model $f$ of the system to then design a robust-trajectory centric controller for the system. The trajectory-centric controller consists of the open loop state and control ($x_k$, $u_k$) and the local stabilizing policy $\pi_\theta$ which are optimized jointly while minimizing the cost to perform the desired task for the system. This joint optimization is performed as an instance of non-linear program, which is explained next with first a brief introduction to trajectory introduction.

Consider the discrete-time dynamical system,

$$x_{k+1} = f(x_k, u_k)$$

where $x_k \in R^{n_x}$, $u_k \in R^{n_u}$ are the differential states and controls, respectively. The function $f: R^{n_x + n_u} \to R^{n_x}$ governs the evolution of the differential states. Note that the discrete-time formulation can be obtained from a continuous time system $\dot{x} = \hat{f}(x, u)$ by using the explicit Euler integration scheme ($x_{k+1} - x_k$) = $\Delta t \cdot \hat{f}(x_k, u_k)$ where $\Delta t$ is the time-step for integration.

In typical applications the states and controls are restricted to lie in sets $X = \{x \in R^{n_x} \mid \underline{x} \le x \le \overline{x}\} \subseteq R^{n_x}$ and $U = \{u \in R^{n_u} \mid \underline{u} \le u \le \overline{u}\} \subseteq R^{n_u}$ i.e., $x_k \in X$, $u_k \in U$. We use [K] to denote the index set $\{0, 1, ..., K\}$. The trajectory optimization problem is to manipulate the controls $u_k$ over a certain number of time steps [$T$ - 1] so that the resulting trajectory $\{x_k\}_{k \in [T]}$ minimizes a cost function $c(x_k, u_k)$. More formally, the trajectory optimization problem aims to solve the following optimization problem.

$$\min_{x_k, u_k} \sum_{k \in [T]} c(x_k, u_k)$$

such that,

$$x_{k+1} = f(x_k, u_k)$$

$$x_0 = \tilde{x}_0$$

$x_k \in X$, $u_k \in U$ for $k \in [T]$

Some embodiments of the present disclosure are based on the realization that the above constrained trajectory optimization problem is a non-linear optimization program (or NLP). Consequently, it is the object of some embodiments to solve the non-linear trajectory optimization program using an interior point method.

In the following text, we use the following shorthand notation, $\left\|v\right\|_M^2 = v^T Mv$. We denote the nominal trajectory as $X \equiv x_0, x_1, x_2, x_3, ... , x_{T-1}, x_T$, $U \equiv u_0, u_1, u_2, u_3, ... , u_{T-1}$. The actual trajectory followed by the system is denoted as $\hat{X} \equiv \hat{x}_0, \hat{x}_1, \hat{x}_2, \hat{x}_3, ... , \hat{x}_{T-1}, \hat{x}_T$, We denote a local policy as $\pi_\theta$ where $\pi$ is the policy and $\theta$ denotes the parameters of the policy. The trajectory cost is also sometimes denoted as $J = \Sigma_{k\in[T]} c(x_k, u_k)$ .

Sample efficiency of the MBRL techniques make it a very attractive option for learning optimal controllers for physical systems. Some embodiments of this invention are based on the realization that the performance of MBRL algorithms is extremely susceptible to modeling errors. Any error in the predictive model of the systems is compounded very quickly and can drive the controller to areas where the model is highly uncertain and thus, very hard to control. This can make the whole learning process to diverge and thus, fail.

Some embodiments of the invention are based on the realization that an optimizer can be constrained to avoid the uncertain regions of state-space of a system if the trajectory is solved simultaneously with a policy which is optimized to stabilize the trajectory locally. Such a joint optimization forces an optimization to find trajectories which easy to stabilize as well as optimal. Thus, it allows us to strike a trade-off between the optimality and robustness in the presence of uncertain models estimated during the learning process. This results in better, stable learning of the MBRL algorithms.

Some embodiments of the invention are based on the realization that a lot of trajectory-stabilizing techniques compute controller that are time-varying. This makes real-time control of the controlled system harder. In general, a RL algorithm computes a state-dependent policy as an output as it is easier to implement. The main reason being that the system is non-linear and thus the system dynamics change even with a small perturbation in the system states. The time-dependent tracking controllers are not state-dependent and thus, perform poorly in the scene of perturbation from the planned trajectory. Consequently, the current invention proposes to compute time-independent feedback policy for trajectory stabilization locally around a nominal trajectory.

FIG. 6A is a diagram to illustrate evolution 610 of stochastic dynamics of system which may be represented by a Gaussian process. Given that the system is at an initial state 613 $x_k$, and an input 611 $u_k$, the system dynamics is represented by the stochastic function 612 $f(m(x), k(x, x'))$. (Note that $x$ here represents the input to the model, i.e., the pair $(x_k, u_k)$.

Consider the case where the system dynamics, $f$ is stochastic (i.e., it is defined by a mean and co-variance function), and only the mean component of $f$ is used to design the controller. Consider the deviation of the system at any step 'k' from the state trajectory $X$ and denote it as $\delta x_k = x_k - \hat{x}_k$. We introduce a local (time-invariant) policy $\pi_\theta$ that regulates the local trajectory deviation $\delta x_k$ and thus, the final controller is denoted as $\hat{u}_k = u_k + \pi_\theta(\delta x_k)$. The closed-loop dynamics for the system under this control is then given by the following:

$$\hat{x}_{k+1} \;=\; f(\hat{x}_k, \hat{u}_k) = f(x_k + \delta x_k, u_k + \pi_\theta(\delta x_k))$$

The main objective is to find the time-invariant feedback policy $\pi_\theta$ that can stabilize the open-loop trajectory $X$ locally within $R_k \subset R^{n_x}$ where $R_k$ defines the set of uncertainty for the deviation $\delta x_k$. The uncertainty region $R_k$ can be approximated by fitting an ellipsoid to the uncertainty estimate using a diagonal positive definite matrix $S_k$ such that $R_k = \{\delta x_k : \delta x_k^T S_k \delta x_k \leq 1\}$. The general optimization problem that achieves that is proposed as:

$$J^* \;=\; \min_{X,U,\theta} E_{\delta x_k \in R} \left[ J(X + \delta X, U + \pi_\theta(\delta x_k)) \right]$$

$$x_{k+1} \;=\; \hat{f}(x_k, u_k)$$

where $\hat{f}(\cdot, \cdot)$ denotes the mean function of the model. Note that in the above equation, we have introduced additional optimization parameters corresponding to the policy $\pi_\theta$ when compared to classical Trajectory Optimization problem introduced earlier.

Some embodiments of the present disclosure are based on the realization that a stochastic model for a system can be used to estimate the set of system states where the system might move from the nominal trajectory during run time. This estimate of the uncertainty sets gives us the set of states where the system needs to be stabilized during run-time. The goal of the stabilizing controller is push all the states in this set back to the original nominal trajectory. As long as this is true, the system can then follow the original nominal trajectory and thus can achieve the desired optimal performance in performing the desired task.

It is the object of some embodiment to estimate the uncertainty region $R_k$ using a stochastic machine learning algorithm like Gaussian process regression or Stochastic neural network during the model learning process. As explained earlier, Gaussian processes may be used to learn the stochastic dynamics model for the system as a probabilistic function.

Some embodiment of the invention use this probabilistic relationship to estimate the confidence intervals using the predictive Gaussian distribution at a test data point. A confidence level $\alpha \in (0,1)$ is a user-chosen input that controls the size of the uncertainty set. This value is generally selected closer to 1 for worst-case controller design.

FIGS. 5A and 5B indicate that the mean prediction value obtained by Gaussian process regression at a test point x* 512 is denoted by y(x*) 513 and the confidence interval 514. The learned Gaussian process regression provides the mean prediction estimate 515 at any point as well as the confidence interval 516 at the same test point. As the expected force distribution at any point is given by a Gaussian distribution, the predicted state distribution at x* is shown in 520. The mean value of predicted state 521 (513 in process 510) is y(x*) and the confidence interval is 522 (shown as 514 in process 510).

Further, FIG. 6A is a diagram illustrating the idea of evolution of dynamics of a system using a stochastic process and FIG. 6B is a diagram illustrating the idea of stabilization of a controlled trajectory using a stabilizing policy during the trajectory-centric controller design, according to embodiments of the present disclosure.

Some embodiments of the invention use this uncertainty region 630 estimated by the machine learning method to compute a stabilizing policy simultaneously with the trajectory 650. The function of the stabilizing policy is to keep the system close to the nominal system states which is given by the trajectory.

The robust trajectory optimization problem is to minimize the trajectory cost while at the same time satisfying a *robust constraint* at every step along the trajectory. The purpose 620 of the local stabilizing controller is to push the state with worst-case deviation 640 at every step along the trajectory 650 to $\varepsilon$-tolerance balls 620 around the trajectory. Mathematically, we express the problem as following:

$$\min_{x_k, u_k} \sum_{k \in [T]} c(x_k, u_k)$$

such that, $x_{k+1} = f(x_k, u_k)$ for $k \in [T]$

$$x_0 = \tilde{x}_0$$

$x_k \in X, u_k \in U$ for $k \in [T]$

$$\max_{\delta x_k \in R^k} || x_{k+1} - f(x_k + \delta x_k, u_k + \pi_\theta(\delta x_k)) ||_2 \leq \epsilon_k$$

We define the last term in the above equation as the *robustness constraint* for the trajectory optimization problem. There are several features of this constraint that are worth mentioning. The above constraint acts on the trajectory at every point along the nominal trajectory, and it ensures that the local stabilizing policy $\pi_\theta$ pushes the worst-case deviation of the system state in the set $R^k$ towards the nominal trajectory. Also, this allows a user how closely wants to follow the nominal trajectory by allowign to select a hyperparameter $\varepsilon_k$. This hyperparameter can also be time-indexed.

FIG. 7 is a flowchart illustrating the different steps involved in solution of the non-linear optimization program used to solve the trajectory-centric controller, according to the embodiments of the present disclosure. The non-linear optimization program solver 710 accepts as input the known (learned or completely known) system dynamics 720, the state and input set of the system 730, the *robustness constraint* 740 and the desired task or the objective function 750. The output provided by the non-linear optimization program solver is the optimal state input trajectory $(\{x_k\}_{k \in [T]}, \{u_k\}_{k \in [T]})$ as well as the stabilizing policy $\pi_\theta$

Some embodiments of the present invention are based on the realization that the *robustness constraint* leads to a sub-optimization problem inside of the main trajectory optimization problem. This requires estimating the term $\delta x_k$ in the set $R^k$ that incurs the maximum deviation under the action of a stabilizing policy $\pi_\theta$. Then, the robustness constraint is satisfied when such a point incurs a deviation less than the hyperparameter $\varepsilon_k$. Finding solutions to the optimization problem for the robustness constraint for arbitrary non-linear dynamics $f$ is very challenging. However, the problem can be simplified by linearizing the dynamics of the system around the state-control pair $(x_k, u_k)$ and the linear dynamics can be used to find a local solution to the optimization problem inside the robustness constraint.

The robustness constraint for the linearized dynamics model can be obtained using Taylor series expansion for the non-linear dynamics model $f$, and thus the robustness constraint term (call it $d_{max}$) can be simplified to the following term in the following.

$$d_{max, \ k} = \max_{\delta x_k^T S_k \delta x_k \leq 1} \left\| A(x_k, u_k) \cdot \delta x_k + B(x_k, u_k) \cdot \pi_\theta(\delta x_k) \right\|_2$$

where, $A(x_k, u_k) = \nabla_{x_k} \hat{f}(x_k, u_k)$ and $B(x_k, u_k) = \nabla_{u_k} \hat{f}(x_k, u_k)$ are the linearized models for the mean function of the model $\hat{f}$.

Certain embodiments of the current disclsoure are based on the realization that the *robustness constraint* on the optimization problem might need extensive tuning of the hyperparameter $\varepsilon_k$ to get a feasible solution (i.e., a solution that satisfies the constraint for all $k \in [T]$ ). In some cases, a feasible solution may not even be guaranteed. A possible solution to circumvent this possible situation to turn the hard *robustness constraint* into a soft constraint by adding what to the objective function, and thus penalizing it every time the constraint is violated. In the most simplest setting, the robustness term $d_{max, \ k}$ can be just moved to the objective function and minimized during optimization. This relaxes the constraint for robustness while guaranteeing feasibility of the optimization problem.

Some embodiments of the invention may solve the following optimization problem using the *robustness constraint* as a soft constraint and moving it to the objective function.

$$\min_{x_k, u_k, \theta} \left( \sum_{k \in [T]} c(x_k, u_k) + \beta \cdot \sum_{k \in [T]} d_{max,k} \right)$$

such that, $x_{k+1} = f(x_k, u_k)$ for $k \in [T]$

$$x_0 = \tilde{x}_0$$

$x_k \in X$, $u_k \in U$ for $k \in [T]$

Some embodiments of the present disclosure are based on the realization that in order to be able to solve the non-linear trajectory optimization with *robustness constraint* (either as a hard or soft constraint) , there is a requirement of computation of gradient of the robustness constraint. The robustness constraint is, however, a non-differentiable due to the *maximum* function in the constraint which is non-differentiable. However, a first-order gradient of the robustness term can be obtained using the Dankin's theorem. This realization is critical to the solution of the trajectory optimization problem. Thus it is the object of certain embodiments to estimate the gradient of the robustness constraint using Danskin's theorem.

More formally, let $K \subset R^m$ be a non-empty, closed set and let $\Omega \subseteq R^n$ be a nonempty, open set. Assume that the function $g: \Omega \times K \to R$ is continuous on $\Omega \times K$ and that $\nabla_x g(x, y)$ exists and is continuous on $\Omega \times K$. Define the function $h: \Omega \to R \cup \{\infty\}$ by:

$$h(x) \equiv \sup_{y \in K} g(x, y) \ , x \in \Omega$$

and,

$$M(x) \equiv \{y \in K \ | h(x) = g(x, y)\} \ .$$

Let $x \in \Omega$ be a given vector. Suppose that a neighborhood $N(x) \subseteq \Omega$ of $x$ exists such that $M(x')$ is nonempty for all $x' \in N(x)$ and the set $\cup_{x' \in N(x)} M(x')$ is bounded. Then according to Danskin's theorem following two statements are valid.

The function *h* is directionally differentiable at *x* and

$$h'(x; d) = \sup_{y \in M(x)} \nabla_x g(x, y)^T d$$

If $M(x)$ reduces to singleton, say $M(x) = \{y(x)\}$, then *h* is Gaeaux differentiable at *x* and

$$\nabla h(x) = \nabla_x \ g(x, y(x))$$

Dankin's theorem allows us to find the gradient of the robustness constraint by first computing the argument of the maximum function and then evaluating the gradient of the maximum function at the point.

Thus, in order to find the gradient of the robust constraint, it is necessary to interpret it as an optimization problem in $\delta x_k$, which is presented next. Some embodiments of the present disclosure are based on the realization that solution to the finding gradient of the robustness constraint in the general form could be very challenging. A simplification to the robustness constraint is obtained using by a linear parameterization of the stabilizing policy which allows to analytically compute the argument of the maximum function in the robustness constraint. This is very beneficial for computational requirements as it can be obtained analytically without any iterative optimization procedure.

Mathematically, we represent the stabilizing policy as time-invariant constant matrix *W* such that $\pi_\theta(\delta x_k) = W \cdot \delta x_k$. Then the following realization lead us to estimate the argument of the maximum function in the robustness constraint.

The robustness constraint term $d_{max,k}$ for the linear parameterization of the feedback policy is quadratic in the argument $\delta x_k$. Mathematically, it is written as follows:

$$\max_{\delta x_k} \left|\left| M_k \delta x_k \right|\right|_P^2 = \max_{\delta x_k} \delta x_k^T M_k^T \cdot P \cdot M_k \delta x_k$$

such that, $\delta x_k^T S_k \delta x_k \le 1$

where, $M_k(x_k, u_k, W) \equiv A(x_k, u_k) + B(x_k, u_k) \cdot W$

The resulting form of the worst-case deviation term $d_{max, k}$ allows us to compute it analytically as the maximum eigenvalue $\lambda_{max}$ of a matrix *Q* , where the matrix $Q \equiv S_k^{-\frac{1}{2}} M_k^T \cdot P \cdot M_k S_k^{-\frac{1}{2}}$ .

The worst deviation $\delta x_{max}$ is obtained as the corresponding eigenvector of the maximum eigenvalue.

The gradient of the robustness constraint $d_{max, k}$ can be then obtained using Dankin's theorem as the gradient of the term at $\delta x_{max}$. More explicitly, using a notation *z* for an arbitrary vector, and using

$$Q(z) = S_k^{-\frac{1}{2}} M_k^T(z) \cdot P \cdot M_k(z) S_k^{-\frac{1}{2}}$$ , the gradient of the robustness constraint term $d_{max}$ wrt to the arbitrary vector z can be computed as

$$\nabla_z d_{max} = \nabla_z \delta x_{max}^T Q(z) \delta x_{max}$$

This provides us the gradient of the robustness constraint term at a time-step 'k'. It is the object of some embodiment to compute the gradient of the robustness constraint term at all $k \in [T]$ .

FIG. 8 is a flowchart illustrating the different steps to estimate the gradient of the robustness constraint for the trajectory-centric controller synthesis, according to the embodiments of the present disclosure. The estimate of the uncertainty region around a nominal state, action pair $(x_k, u_k)$ is computed by a step 810 which is then used in step 820 to compute the state with worst-case deviation in the uncertainty region. This worst-case deviation state is then used to compute the gradient of the *robustness constraint* by another embodiment in step 830. The gradient information is then passed to the non-linear optimization program solver in step 840.

The robust policy optimization problem can then be solved using the gradient of the robustness constraint as well as the gradient of dynamics of the system to obtain the optimal solution. Some embodiments of the invetion use the cost function for the trajectory, the dynamics of the system, the robustness constraint using the uncertainty region for the system and the gradient information of the dynamics as well as the robustness constraint to solve the robust non-linear optimization program to simultaneously synthesize the open-loop trajectory $X = x_1, x_2, ... , x_T , U = u_1, u_2, ... , u_{T-1}$ and the local stabilizing policy $\pi_\theta(\delta x_k) = W \cdot \delta x_k$.

Simulation tests are performed using non-linear systems to test and verify the benefits of the proposed robust tarjectory-centric controller. In particular, can the feedback controller obtained by this optimization stabilize the open-loop trajectory in the presence of bounded uncertainties? An underactuated pendulum system is used to study this question. The objective is to demonstrate effectiveness of the solution in stabilization of the optimal trajectory and compare the feedback gains obtained via the optimization against time-varying LQR solution. The dynamics of the pendulum is modeled as $I\ddot\theta + b\dot\theta + mgl \cdot sin(\theta) = u$. The continuous-time model is discretized as $(\theta_{k+1}, \dot\theta_{k+1}) = f((\theta_k, \dot\theta_k), u\_k)$. The goal state is $x_g = [\pi, 0]$, and the initial state is $x_0 = [0,0]$.

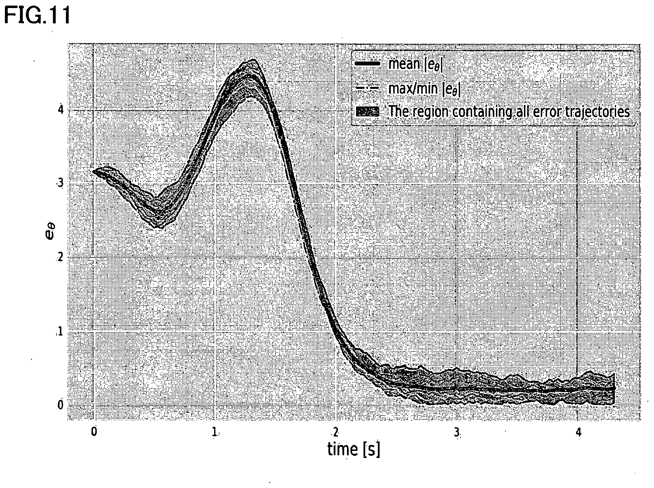

FIG. 9 shows an illustrative example on the effectiveness of the proposed controller on an inverted pendulum system in the presence of unknown dynamics. The open-loop controller 920 cannot reach the goal as the system dynamics is incorrect, however the stabilizing controller 910 can stabilize the entire trajectory using time-invariant gains. FIG. 10A shows the feedforward (open-loop) control trajectory. FIG. 10B shows the gains for the time-invariant feedback matrix $\pi_\theta = W$ (note that there are two gains, one for pendulum's angular position $\theta$ and then another one for the angular velocity $\dot\theta$). FIG. 10C shows the time-variant LQR gains obtained by solving the LQR problem at every point of the trajectory using the linearized dynamics, $A(k)$ and $B(k)$. FIG. 11 shows the statistical behavior of the proposed controller for the same system in presence of several different disturbances injected into the system. As seen, the controller always goes to 0.

The proposed robust trajectory-centric controller is tested on a real ball-and-beam system with unknown dynamics. The ball-and-beam system is a low dimensional non-linear system with non-linearity due to the presence of dry friction and delay in the actuators. The ball-and-beam system is modeled with 4 state variables $[x, \dot x, \theta, \dot\theta]$, where $x$ is the position of the ball, $\dot x$ is the ball velocity, $\theta$ is the angular position of the beam and $\dot\theta$ is the angular velocity of the beam. The acceleration of the ball is given by the following non-linear equation:

$$\ddot{x} = \frac{m_{ball} x \, \dot\theta^2 - b_1 \dot x - b_2 m_{ball} \, g \cos(\theta) - m_{ball} \, g \sin(\theta)}{\dfrac{I_{ball}}{r_{ball}^2} + m_{ball}}$$

where, $m_{ball}$ is the mass of the ball, $I_{ball}$ is the rotational inertia of the ball, $r_{ball}$ is the radius of the ball, $b_1$ is the coefficient of viscous friction of the ball on the beam, $b_2$ is the coefficient of dry friction of the ball on the beam. An inaccurate model of the system is used to design the open-loop trajectory as well the robust trajectory-centric controller. The proposed robust controller achieves better performance than the open-loop controller even with the incorrect model.

FIG. 12 shows a ball-and-beam system which consists of a ball 1150 which can move on a beam 1120. The initial position of the ball is fixed 1110. The task is to move the ball to desired location and keep it there. The inclination of the beam is measured an encoder 1130 and encoder shaft 1140. FIG. 13 shows an example of typical behavior of the proposed trajectory-centric controller compared against the open-loop controller, FIG. 13 shows that the mean steady error 1210 for the proposed controller goes to zero. However the open-loop controller performs poorly with non-zero steady error 1220.

The above-described embodiments of the present disclosure can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component. Though, a processor may be implemented using circuitry in any suitable format.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Also, the embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments. Further, use of ordinal terms such as first, second, in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

**Claims**

1. A controller for optimizing a local time-invariant feedback policy of a non-linear system for trajectory-centric reinforcement learning, comprising:

an interface configured to receive data including tuples of system states, control data and state transitions measured by sensors;
a memory to store processor executable programs including a stochastic predictive learned model for generating a nominal state and control trajectory, said trajectory being an open-loop trajectory, for a desired time-horizon as a function of time steps, in response to a task command for the system received via the interface, a control policy including machine learning method algorithms and an initial random control policy, the local time-invariant feedback policy for regulating deviations along the nominal state and control trajectory;
at least one processor configured to:

learn the stochastic predictive model for the system using a set of the data collected during trial and error experiments performed using the initial random control policy;
estimate mean prediction and uncertainty associated with the stochastic predictive model;
formulate a trajectory-centric controller synthesis problem to compute the nominal trajectory along with a feedforward control and a stabilizing time-invariant feedback control simultaneously;
determine a local set of deviations of the system, using the learned stochastic system model, from a nominal system state upon use of a control input at a current time-step;
determine a system state with a worst-case deviation from the nominal system state in the local set of deviations of the system;
determine a gradient of a robustness constraint by computing a first-order derivative of the robustness constraint at the system state with worst-case deviation;
determine the optimal system state trajectory, the feedforward control input and the local time-invariant feedback policy that regulates the system state to the nominal state and control trajectory by minimizing a cost of a state-control trajectory while satisfying state and input constraints by solving a robust policy optimization using non-linear programming, thereby synthesizing a trajectory-centric control policy by a time-dependent feedforward control and the local time-invariant feedback control that stabilizes the time-dependent feedforward control;
update the control data according to the solved optimization problem; and
output the updated control data via the interface.

2. The controller of claim 1, wherein the system is a discrete-time dynamical system.

3. The controller of claim 2, wherein a synthesis of the trajectory-centric control policy for the discrete-time dynamical system is formulated as a non-linear optimization program with non-linear constraints.

4. The controller of claim 3, wherein the non-linear constraints are system dynamics and stabilizing constraints for the local time- invariant feedback policy.

5. The controller of claim 1, wherein the local time-invariant feedback policy is determined as a solution of a mathematical robust trajectory optimization problem that minimizes the trajectory cost and additionally satisfies the robustness constraint at every step along the trajectory which is push a current state of the system in a worst-case deviation state at a current time step along the trajectory into an error-tolerance around the trajectory at a next time step.

6. The controller of claim 1, wherein local sets of uncertainty along the nominal trajectory are obtained by a stochastic function approximator used to learn a forward dynamics model of the system.

7. The controller of claim 1, wherein the worst-case deviation state for the system at every state along a nominal trajectory in a defined set of system states is obtained by solving an optimization problem.

8. The controller of claim 1, wherein the formulated nonlinear program with the robustness constraint is solved to obtain the feedforward control along with the time-invariant feedback controller using the gradient of the robustness constraint at the worst-case deviation state, or

   wherein at least one of the sensors performs a wireless communication via the interface, or
   wherein at least one of the sensors is a three dimensional (3D) camera providing moving pictures including depth images, or
   wherein the trajectory-centric controller synthesis problem is a non-linear program.

9. The controller of claim 1, wherein the sensors are arranged in the system and predetermined peripheral positions.

10. The controller of claim 9, wherein at least one of the predetermined peripheral positions is determined by a view-angle such that the 3D camera captures a moving range of the system.

11. A computer-implemented method for optimizing a local time-invariant feedback policy of a non-linear system for trajectory-centric reinforcement learning comprising: receiving, by an interface, data including tuples of system states, control data, state transitions measured by sensors; storing, in a memory to store processor executable programs, a stochastic predictive learned model for generating a nominal state and control trajectory, said trajectory being an open-loop trajectory, for a desired time-horizon as a function of time steps, in response to a task command for the system received via the interface, a control policy including machine learning method algorithms and an initial random control policy, the local time-invariant feedback policy for regulating deviations along the nominal state and control trajectory;

   learning a stochastic predictive model for the system using a set of data collected during trial and error experiments performed using the initial random control policy;
   estimating mean prediction and uncertainty associated with the stochastic predictive model;
   formulating a trajectory-centric controller synthesis problem to compute a nominal trajectory along with a feedforward control and a stabilizing time-invariant feedback control simultaneously;
   determining a local set of deviations of the system, using the learned stochastic system model, from a nominal system state upon use of a control input at a current time-step;
   determining a system state with a worst-case deviation from the nominal system state in the local set of deviations of the system;
   determining a gradient of the robustness constraint by computing a first-order derivative of a robustness constraint at the system state with worst-case deviation;
   determining the optimal system state trajectory, the feedforward control input and the local time-invariant feedback policy that regulates the system state to the nominal trajectory by minimizing a cost of the state-control trajectory while satisfying state and input constraints by providing and solving a robust policy optimization problem using non-linear programming;
   updating the control data according to the solved optimization problem; and
   output the updated control data via the interface,
   wherein, to perform the trajectory-centric reinforcement learning of the system, a trajectory-centric control policy is synthesized by a time-dependent feedforward control and the local time-invariant feedback policy that stabilizes the time-dependent feedforward control.

12. The method of claim 11, wherein the system is a discrete-time dynamical system.

13. The method of claim 12, wherein a synthesis of the trajectory-centric control policy for the discrete-time dynamical system is formulated as a non-linear optimization program with non-linear constraints.

## Patentansprüche

1. Steuereinheit zur Optimierung einer lokalen zeitinvarianten Rückkopplungsstrategie eines nichtlinearen Systems für trajektorienzentriertes Verstärkungslernen, umfassend:

   eine Schnittstelle, die eingerichtet ist, Daten, die Tupel von Systemzuständen, Steuerdaten und von Sensoren gemessene Zustandsübergänge aufweisen, zu empfangen;
   einen Arbeitsspeicher zum Speichern von prozessorausführbaren Programmen, aufweisend ein stochastisches prädiktives gelerntes Modell zum Erzeugen einer nominalen Zustands- und Steuerungstrajektorie, wobei die Trajektorie eine Trajektorie mit offener Schleife ist, für einen gewünschten Zeithorizont als Funktion von Zeitschritten in Reaktion auf einen über die Schnittstelle empfangenen Aufgabenbefehl für das System, einer Steuerungsstrategie, die Algorithmen eines Maschinenlernverfahrens und eine anfängliche zufällige Steuerungsstrategie enthält, die lokale zeitinvariante Rückkopplungsstrategie zum Regeln von Abweichungen entlang des nominalen Zustands und der Steuerungstrajektorie;

zumindest einen Prozessor, der eingerichtet ist zum:

Lernen des stochastischen prädiktiven Modells für das System unter Verwendung eines Satzes der Daten, die im Rahmen von Versuchs- und Irrtumsexperimenten gesammelt werden, die unter Verwendung der anfänglichen zufälligen Steuerungsstrategie durchgeführt werden;

Schätzen einer mittleren Vorhersage und einer mit dem stochastischen prädiktiven Modell verbundenen Unsicherheit;

Formulieren eines trajektorienzentrierten Steuereinheitssyntheseproblems, um die nominale Trajektorie zusammen mit einer Vorwärtssteuerung und einer stabilisierenden zeitinvarianten Rücckopplungssteuerung gleichzeitig zu berechnen;

Bestimmen eines lokalen Satzes von Abweichungen des Systems, unter Verwendung des gelernten stochastischen Systemmodells, von einem nominalen Systemzustand bei Verwendung einer Steuereingabe in einem aktuellen Zeitschritt;

Bestimmen eines Systemzustands mit einer Worst-Case-Abweichung vom nominalen Systemzustand in dem lokalen Satz von Abweichungen des Systems;

Bestimmen eines Gradienten einer Robustheitsbedingung durch Berechnung einer Ableitung erster Ordnung der Robustheitsbedingung bei dem Systemzustand mit Worst-Case-Abweichung;

Bestimmen der optimalen Systemzustandtrajektorie, der Vorwärtssteuerungseingabe und der lokalen zeitinvarianten Rückkopplungsstrategie, die den Systemzustand auf die nominale Zustands- und Steuerungstrajektorie regelt, indem Kosten einer Zustandssteuerungstrajektorie minimiert werden, während Zustands- und Eingabebedingungen erfüllt werden, indem eine robuste Strategieoptimierung unter Verwendung nichtlinearer Programmierung gelöst wird, wodurch eine trajektorienzentrierte Steuerungsstrategie durch eine zeitabhängige Vorwärtssteuerung und die lokale zeitinvariante Rückkopplungssteuerung, die die zeitabhängige Vorwärtssteuerung stabilisiert, synthetisiert wird;

Aktualisieren der Steuerungsdaten gemäß dem gelösten Optimierungsproblem; und

Ausgeben der aktualisierten Steuerungsdaten über die Schnittstelle.

2. Steuereinheit nach Anspruch 1, wobei das System ein zeitdiskretes dynamisches System ist.

3. Steuereinheit nach Anspruch 2, wobei eine Synthese der trajektorienzentrierten Steuerungsstrategie für das zeitdiskrete dynamische System als nichtlineares Optimierungsprogramm mit nichtlinearen Bedingungen formuliert ist.

4. Steuereinheit nach Anspruch 3, wobei die nichtlinearen Bedingungen Systemdynamiken und stabilisierende Bedingungen für die lokale zeitinvariante Rückkopplungsstrategie sind.

5. Steuereinheit nach Anspruch 1, wobei die lokale zeitinvariante Rückkopplungsstrategie als Lösung eines mathematischen robusten Trajektorienoptimierungsproblems bestimmt wird, das die Trajektorienkosten minimiert und zusätzlich die Robustheitsbedingung bei jedem Schritt entlang der Trajektorie erfüllt, die darin besteht, dass ein aktueller Zustand des Systems in einem Worst-Case-Abweichungszustand bei einem aktuellen Zeitschritt entlang der Trajektorie in eine Fehlertoleranz um die Trajektorie bei einem nächsten Zeitschritt geschobent wird.

6. Steuereinheit nach Anspruch 1, wobei lokale Sätze von Unsicherheit entlang der nominalen Trajektorie durch einen stochastischen Funktionsapproximator erhalten werden, der zum Lernen eines Vorwärtsdynamikmodells des Systems verwendet wird.

7. Steuereinheit nach Anspruch 1, wobei der Worst-Case-Abweichungszustand für das System bei jedem Zustand entlang einer nominalen Trajektorie in einem definierten Satz von Systemzuständen durch Lösen eines Optimierungsproblems erhalten wird.

8. Steuereinheit nach Anspruch 1, wobei das formulierte nichtlineare Programm mit der Robustheitsbedingung gelöst wird, um die Vorwärtssteuerung zusammen mit der zeitinvarianten Rückkopplungssteuerung unter Verwendung des Gradienten der Robustheitsbedingung bei dem Worst-Case-Abweichungszustand zu erhalten, oder

wobei zumindest einer der Sensoren eine drahtlose Kommunikation über die Schnittstelle durchführt, oder wobei mindestens einer der Sensoren eine dreidimensionale (3D) Kamera ist, die bewegte Bilder einschließlich Tiefenbildern bereitstellt, oder wobei das trajektorienzentrierte Steuerungssyntheseproblem ein nichtlineares Programm ist.

**9.** Steuereinheit nach Anspruch 1, wobei die Sensoren im System und an vorgegebenen peripheren Positionen angeordnet sind.

**10.** Steuereinheit nach Anspruch 9, wobei mindestens eine der vorgegebenen peripheren Positionen durch einen solchen Blickwinkel bestimmt wird, dass die 3D-Kamera einen Bewegungsbereich des Systems erfasst.

**11.** Computerimplementiertes Verfahren zur Optimierung einer lokalen zeitinvarianten Rückkopplungsstrategie eines nichtlinearen Systems für trajektorienzentriertes Verstärkungslernen P, umfassend: Empfangen, durch eine Schnittstelle, von Daten, die Tupel von Systemzuständen, Steuerdaten und von Sensoren gemessene Zustandsübergänge aufweisen; Speichern, in einem Arbeitsspeicher zum Speichern von prozessorausführbaren Programmen, eines stochastischen prädiktiven gelernten Modells zum Erzeugen einer nominalen Zustands- und Steuerungstrajektorie, wobei die Trajektorie eine Trajektorie mit offener Schleife ist, für einen gewünschten Zeithorizont als Funktion von Zeitschritten in Reaktion auf einen über die Schnittstelle empfangenen Aufgabenbefehl für das System , einer Steuerungsstrategie, die Algorithmen eines Maschinenlernverfahrens und eine anfängliche zufällige Steuerungsstrategie enthält, der lokalen zeitinvarianten Rückkopplungsstrategie zum Regeln von Abweichungen entlang des nominalen Zustands und der Steuerungstrajektorie;

Lernen eines stochastischen prädiktiven Modells für das System unter Verwendung eines Satzes von Daten, die im Rahmen von Versuchs- und Irrtumsexperimenten gesammelt worden sind, die unter Verwendung der anfänglichen zufälligen Steuerungsstrategie durchgeführt worden sind;
Schätzen einer mittleren Vorhersage und einer mit dem stochastischen prädiktiven Modell verbundenen Unsicherheit;
Formulieren eines trajektorienzentrierten Steuereinheitssyntheseproblems, um eine nominale Trajektorie zusammen mit einer Vorwärtssteuerung und einer stabilisierenden zeitinvarianten Rücckopplungssteuerung gleichzeitig zu berechnen;
Bestimmen eines lokalen Satzes von Abweichungen des Systems, unter Verwendung des gelernten stochastischen Systemmodells, von einem nominalen Systemzustand bei Verwendung einer Steuereingabe in einem aktuellen Zeitschritt;
Bestimmen eines Systemzustands mit einer Worst-Case-Abweichung vom nominalen Systemzustand in dem lokalen Satz von Abweichungen des Systems;
Bestimmen eines Gradienten der Robustheitsbedingung durch Berechnung einer Ableitung erster Ordnung einer Robustheitsbedingung bei dem Systemzustand mit Worst-Case-Abweichung;
Bestimmen der optimalen Systemzustandstrajektorie, der Vorwärtssteuerungseingabe und der lokalen zeitinvarianten Rückkopplungsstrategie, die den Systemzustand auf die nominale Trajektorie regelt, indem Kosten der Zustandssteuerungstrajektorie minimiert werden, während Zustands- und Eingabebedingungen erfüllt werden, indem ein robustes Strategieoptimierungsproblem unter Verwendung nichtlinearer Programmierung gelöst wird;
Aktualisieren der Steuerungsdaten gemäß dem gelösten Optimierungsproblem; und
Ausgeben der aktualisierten Steuerungsdaten über die Schnittstelle,
wobei zur Durchführung des trajektorienzentrierten Verstärkungslernens des Systems eine trajektorienzentrierte Steuerungsstrategie durch eine zeitabhängige Vorwärtssteuerung und die lokale zeitinvariante Rückkopplungsstrategie, die die zeitabhängige Vorwärtssteuerung stabilisiert, synthetisiert wird.

**12.** Verfahren nach Anspruch 11, wobei das System ein zeitdiskretes dynamisches System ist.

**13.** Verfahren nach Anspruch 12, wobei eine Synthese der trajektorienzentrierten Steuerungsstrategie für das zeitdiskrete dynamische System als nichtlineares Optimierungsprogramm mit nichtlinearen Bedingungen formuliert ist.

**Revendications**

**1.** Dispositif de commande permettant d'optimiser une politique locale de rétroaction invariante dans le temps d'un système non linéaire pour l'apprentissage par renforcement centré sur la trajectoire, comprenant :

une interface configurée pour recevoir des données comportant des tuples d'états du système, des données de commande et des transitions d'état mesurées par des capteurs ;

une mémoire pour stocker des programmes exécutables par le processeur comportant un modèle prédictif stochastique appris pour générer un état nominal et une trajectoire de commande, ladite trajectoire étant une trajectoire en boucle ouverte, pour un horizon temporel souhaité en fonction de pas de temps, en réponse à une instruction de tâche pour le système reçue via l'interface, une politique de commande comportant des algorithmes de méthode d'apprentissage automatique et une politique de commande aléatoire initiale, la politique de rétroaction locale invariante dans le temps pour réguler les écarts le long de l'état nominal et de la trajectoire de commande ;

au moins un processeur configuré pour :

apprendre le modèle prédictif stochastique pour le système à l'aide d'un ensemble de données collectées au cours d'expériences d'essai et d'erreur réalisées à l'aide de la politique de commande aléatoire initiale ;

estimer la prédiction moyenne et l'incertitude associées au modèle prédictif stochastique ;

formuler un problème de synthèse de dispositif de commande centré sur la trajectoire afin de calculer simultanément la trajectoire nominale ainsi qu'une commande d'anticipation et une commande de rétroaction stabilisante invariante dans le temps ;

déterminer un ensemble local d'écarts du système, à l'aide du modèle de système stochastique appris, par rapport à un état nominal du système lors de l'utilisation d'une entrée de commande à un moment-étape actuel ;

déterminer un état du système présentant l'écart le plus défavorable par rapport à l'état nominal du système dans l'ensemble local d'écarts du système ;

déterminer un gradient d'une contrainte de robustesse par calcul d'une dérivée de premier ordre de la contrainte de robustesse à l'état du système avec l'écart le plus défavorable ;

déterminer la trajectoire optimale de l'état du système, l'entrée de la commande d'anticipation et la politique de rétroaction locale invariante dans le temps qui régule l'état du système vers l'état nominal et la trajectoire de commande en minimisant le coût d'une trajectoire état-commande tout en satisfaisant les contraintes d'état et d'entrée par la résolution d'une optimisation de politique robuste à l'aide de la programmation non linéaire, synthétisant ainsi une politique de commande centrée sur la trajectoire par une commande d'anticipation dépendante du temps et la commande de rétroaction locale invariante dans le temps qui stabilise la commande d'anticipation dépendante du temps ;

mettre à jour les données de commande en fonction du problème d'optimisation résolu ; et

éditer les données de commande actualisées via l'interface.

2.  Dispositif de commande selon la revendication 1, dans lequel le système est un système dynamique à temps discret.

3.  Dispositif de commande selon la revendication 2, dans lequel une synthèse de la politique de commande centrée sur la trajectoire pour le système dynamique à temps discret est formulée sous la forme d'un programme d'optimisation non linéaire avec des contraintes non linéaires.

4.  Dispositif de commande selon la revendication 3, dans lequel les contraintes non linéaires sont des contraintes de dynamique et de stabilisation du système pour la politique de rétroaction locale invariante dans le temps.

5.  Dispositif de commande selon la revendication 1, dans lequel la politique de rétroaction locale invariante dans le temps est déterminée comme une solution d'un problème mathématique d'optimisation de trajectoire robuste qui minimise le coût de la trajectoire et satisfait en outre la contrainte de robustesse à chaque étape de la trajectoire qui pousse un état actuel du système dans un état d'écart le plus défavorable à un moment-étape actuel le long de la trajectoire dans une tolérance d'erreur autour de la trajectoire à un prochain moment-étape.

6.  Dispositif de commande selon la revendication 1, dans lequel les ensembles locaux d'incertitude le long de la trajectoire nominale sont obtenus par un approximateur de fonction stochastique utilisé pour apprendre un modèle de dynamique avancée du système.

7.  Dispositif de commande selon la revendication 1, dans lequel l'état d'écart le plus défavorable pour le système à chaque état le long d'une trajectoire nominale dans un ensemble défini d'états du système est obtenu en résolvant un problème d'optimisation.

8.  Dispositif de commande selon la revendication 1, dans lequel le programme non linéaire formulé avec la contrainte de robustesse est résolu pour obtenir la commande d'anticipation avec le dispositif de commande de rétroaction invariant dans le temps en utilisant le gradient de la contrainte de robustesse à l'état d'écart le plus défavorable, ou

dans lequel au moins un des capteurs effectue une communication sans fil via l'interface, ou
dans lequel au moins un des capteurs est une caméra tridimensionnelle (3D) fournissant des images animées comportant des images de profondeur, ou
dans lequel le problème de synthèse du dispositif de commande centré sur la trajectoire est un programme non linéaire.

9. Dispositif de commande selon la revendication 1, dans lequel les capteurs sont disposés dans le système et dans des positions périphériques prédéterminées.

10. Dispositif de commande selon la revendication 9, dans lequel au moins une des positions périphériques prédéterminées est déterminée par un angle de vue de telle sorte que la caméra 3D capture une plage de déplacement du système.

11. Méthode mise en oeuvre par ordinateur pour optimiser une politique de rétroaction locale invariante dans le temps d'un système non linéaire pour l'apprentissage par renforcement centré sur la trajectoire, comportant : la réception, par une interface, de données comportant des tuples d'états du système, des données de commande, des transitions d'état mesurées par des capteurs ; le stockage, dans une mémoire destinée à stocker des programmes exécutables par le processeur, d'un modèle appris prédictif stochastique pour générer un état nominal et une trajectoire de commande, ladite trajectoire étant une trajectoire en boucle ouverte, pour un horizon temporel souhaité en fonction de moments-étapes, en réponse à une instruction de tâche pour le système reçue via l'interface, une politique de commande comportant des algorithmes de méthode d'apprentissage automatique et une politique de commande aléatoire initiale, la politique de rétroaction locale invariante dans le temps pour réguler les écarts le long de l'état nominal et de la trajectoire de commande ;

l'apprentissage d'un modèle prédictif stochastique pour le système à l'aide d'un ensemble de données recueillies au cours d'expériences d'essai et d'erreur réalisées à l'aide de la politique de commande aléatoire initiale ;
l'estimation de la prédiction moyenne et de l'incertitude associées au modèle prédictif stochastique ;
la formulation d'un problème de synthèse de dispositif de commande centré sur la trajectoire pour calculer simultanément une trajectoire nominale ainsi qu'une commande d'anticipation et une commande de rétroaction invariante dans le temps et stabilisante ;
la détermination d'un ensemble local d'écarts du système, à l'aide du modèle de système stochastique appris, par rapport à un état nominal du système lors de l'utilisation d'une entrée de commande à un moment-étape actuel ;
la détermination d'un état du système avec un écart le plus défavorable par rapport à l'état nominal du système dans l'ensemble local d'écarts du système ;
la détermination d'un gradient de la contrainte de robustesse en calculant une dérivée de premier ordre d'une contrainte de robustesse à l'état du système avec l'écart le plus défavorable ;
la détermination de la trajectoire optimale de l'état du système, de l'entrée de commande d'anticipation et la politique de rétroaction locale invariante dans le temps qui régule l'état du système vers la trajectoire nominale en minimisant le coût de la trajectoire de commande de l'état tout en satisfaisant les contraintes d'état et d'entrée en fournissant et en résolvant un problème d'optimisation de politique robuste à l'aide d'une programmation non linéaire ;
la mise à jour des données de commande en fonction du problème d'optimisation résolu ; et
l'édition des données de commande mises à jour via l'interface,
dans lequel, pour effectuer l'apprentissage par renforcement centré sur la trajectoire du système, une politique de commande centrée sur la trajectoire est synthétisée par une commande d'anticipation dépendant du temps et la politique de rétroaction locale invariante dans le temps qui stabilise la commande d'anticipation dépendant du temps.

12. Méthode de la revendication 11, dans laquelle le système est un système dynamique à temps discret.

13. Méthode de la revendication 12, dans laquelle la synthèse de la politique de commande centrée sur la trajectoire pour le système dynamique à temps discret est formulée sous la forme d'un programme d'optimisation non linéaire avec des contraintes non linéaires.

# FIG.1A

100

Keyboard 111

Pointing Device/Medium 112

Command/ states 595

HMI 110

NIC 150

Network 190

Processor 120

130

Display Interface 160

Display Device 565

Storage

Algorithms:
Model Learning, Constraint Gradient Estimator, NLP solver

131

Robotic control algorithms

132

Imaging Interface 170

Imaging Device 175

Memory 140

EP 3 924 884 B1

EP 3 924 884 B1

FIG.2

EP 3 924 884 B1

FIG.3

Action, $u_t$ — 340

310 — Environment

330 — Agent

320 — Observation, $x_t$

Reward, $c_t$ — 350

FIG.4

Initialize control policy either randomly or using the known model — 410

$\downarrow$

Run controller on the robot and collect data $D = \{x_k, u_k, x_{k+1}\}$ — 420

$\downarrow$

Estimate the predictive model $f$ of system by minimizing $\left\| f(x_k, u_k) - x_{k+1} \right\|_2$ — 430

Cost function, $c(x_k, u_k)$ — 460

$\downarrow$

Optimize controller using $f$ — 440

$\downarrow$

Compare performance (cost of control trajectory) to test Convergence — 450

No

Yes

EP 3 924 884 B1

# FIG.5A

| Confidence Interval for Gaussian Distribution |
| :---: |

$p(x)$

521

$y(x^*)$

520

522

# FIG.5B

| Confidence Interval for Gaussian Process Regression |
| :---: |

513

511

514

$y(x^*)$
$y(x)$

516

515

512

$x^*$

x

510

EP 3 924 884 B1

FIG.6A

610

611

$f(m(x), k(x, x'))$

612

$u_k$

$x_k$

613

## FIG.6B

640 — State with worst-case deviation at step 'k'

620 — Stabilization action of local feedback

650 — State trajectory

620 — $\varepsilon$-tolerance ball around state at step 'k+1'

630 — Possible perturbation at step 'k'

$x_G$

$x_{k+1}$

$x_k$

$x_{init}$

$x_1$

$x_2$

EP 3 924 884 B1

EP 3 924 884 B1

FIG.7

720 Known system dynamics model

730 State and Input set, $\{X, U\}$

740 Robustness constraint using uncertainty estimates

750 Desired Task or Objective function

710 Non-linear Optimization Program Solver

$\{\{x_k\}_{k \in [T]}, \{u_k\}_{k \in [T]}, \pi_\theta\}$

760

FIG.8

```
┌─────────────────────────────────┐
│  Compute the uncertainty region │
│  in the neighborhood of a state $x_k$ │ ⌇ 810
│  up on use of an action $u_k$   │
└─────────────────────────────────┘
                 │
                 ▼
┌─────────────────────────────────┐
│  Estimate the worst-case deviation │ ⌇ 820
│  state in the uncertainty region │
└─────────────────────────────────┘
                 │
                 ▼
┌─────────────────────────────────┐
│  Use the worst-case deviation   │
│  state to estimate the gradient of │ ⌇ 830
│  the robustness constraint      │
└─────────────────────────────────┘
                 │
                 ▼
┌─────────────────────────────────┐
│  Input this gradient information to │
│  the non-linear optimization    │ ⌇ 840
│  program solver                 │
└─────────────────────────────────┘
```

EP 3 924 884 B1

FIG.9

FIG.10A

open loop control

control

time [s]

FIG.10B

W gains

$W_\theta$

$W_{\dot\theta}$

time [s]

FIG.10C

LQR gains

$W_\theta$

$W_{\dot\theta}$

time [s]

FIG.11

EP 3 924 884 B1

EP 3 924 884 B1

## FIG.12

## FIG.13

EP 3 924 884 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Optimizing the Execution of Dynamic Robot Movements With Learning Control. **KOC OKAN et al.** IEEE TRANSACTIONS ON ROBOTICS. IEEE SERVICE CENTER, 01 August 2019, vol. 35, 909-924